# EUROPÄISCHE PATENTANMELDUNG

(11) **EP 4 813 950 A1**
(43) Veröffentlichungstag der Anmeldung: **30.09.2026**
(21) Anmeldenummer: 26161054.7
(22) Anmeldetag: 26.02.2026
(51) Int. Cl.: C04B 28/02, C04B 38/08, E04C 2/04, E04C 2/06, C04B 111/00, C04B 111/28, C04B 111/34, C04B 111/40

(54) **VERFAHREN ZUR HERSTELLUNG EINES LEICHTBAUELEMENTS MIT BLÄHGLAS ALS LEICHTZUSCHLAG UND MIT DEM VERFAHREN HERGESTELLTES LEICHTBAUELEMENT**

(30) Priorität: 27.03.2025 DE 102025111998
(71) Anmelder: H+L Baustoff GmbH, 08371 Glauchau (DE)
(72) Erfinder: HOMMEL, Michael, 99706 Sondershausen (DE)
(74) Vertreter: Leske, Thomas

(57) **Zusammenfassung**

Es werden ein Verfahren zur Herstellung eines Leichtbauelementes 1 und ein mit dem Verfahren hergestelltes Leichtbauelement beschrieben. Das Leichtbauelement wird aus einem Binder in Form von Zement und einem Leichtzuschlag in Form von Blähglas 3 hergestellt. Die Rohdichte des Binders beträgt ≥ 2000 kg/ m³, die Schüttdichte für den Leichtzuschlag liegt in einem Bereich von 100 bis 400 kg/ m³. Der Leichtzuschlag Blähglas 3 ist als Granulat ausgebildet mit einer Korngrößenverteilung von 0,25 bis 10 mm und ist in einer Menge von 20 bis 70 Gew.-% unter Zugabe von Wasser zugemischt. Die Menge des Blähglases 3 im Leichtbauelement 1 und dessen Korngrößenverteilung sind derart aufeinander abgestimmt, dass das einschichtige Leichtbauelement 1 neben hoher Wärmeleitfähigkeit im Bereich von 0,10 bis 0,20 W/(m K) außerdem lasttragend ist, wobei das Leichtbauelement 1 vorzugsweise eine vorzugsweise blähglasfreie Zementschicht in Richtung auf Innenräume der späteren Baustruktur aufweist, welche oberflächenfertig aushärtet. Die angegebenen Mischungsverhältnisse und Größenverhältnisse des Blähglasgranulats sichern gegenüber normalen Betonelementen ein niedrigeres Schwindverhalten.

## Beschreibung

Die Erfindung betrifft ein Verfahren zur Herstellung eines Leichtbauelementes mit Blähglas als Leichtzuschlag sowie ein mit dem Verfahren hergestelltes Leichtbauelement.

Derartige Leichtbauelemente sind bekannt und bestehen aus einem Binder in Form von Zement und einem Leichtzuschlag, wobei als Leichtzuschlag häufig Blähton verwendet wird. Dieser Blähton wird aus Tonschichten aus der Erde abgebaut, fein gemahlen, granuliert und bei einer Temperatur von 1200° Grad ohne Zusätze gebrannt und dabei gebläht. Die dabei entstehenden Tonkugeln sind von Luftporen durchsetzt, basieren also auf einem keramischen Material. Diese Tonkugeln stellen den Leichtzuschlag für ein derartiges Leichtbauelement dar, so dass ein Leichtbeton mit porigen Zuschlägen erzeugt wird, bei welchen möglichst viel Hohlraum zwischen den Körnern und durch deren Porigkeit entsteht. Die Zuschlagskörner sind nur vom Beton umhüllt und punktweise verbunden. Die Leichtzuschlagsmaterialien weisen ein geringes Gewicht bzw. eine geringe Dichte auf, weshalb die damit hergestellten Leichtbauelemente nicht nur deutlich leichter in ihrem Gewicht sind, es werden auch sehr gute Wärmedämmungseigenschaften erreicht. Da die Blähtonkugeln sich im Inneren eines derartigen Elementes befinden, weisen diese Leichtbauelemente eine hohe Unempfindlichkeit gegen Feuchtigkeit und Frost auf. Sie sind darüber hinaus als nicht brennbarer Stoff feuerbeständig. Da sie aus keramischem Material bestehen, sind sie mechanisch und chemisch beständig, sie schimmeln nicht, verrotten nicht und sind auch geruchsfrei. Das sind wichtige Vorteile gegenüber reinen Betonbauelementen.

Wegen der genannten positiven Eigenschaften bieten sie sich an für Strukturen, welche aus Leichtbauelementen gefertigt sein können. Nachteilig ist, dass die Festigkeit begrenzt ist. Der Einsatz von Leichtbauelementen mit Blähton als Leichtzuschlag wurde daher meistens für Verbundelemente verwendet, bei welchen ein reiner Betonkern als tragendem Teil mit einer Leichtbaubeschichtung versehen worden ist, so dass die positiven Eigenschaften vor allen Dingen hinsichtlich der Wärmedämmung und die für den Bau erforderlichen Trageigenschaften kombiniert werden konnten. Die Grundbestandteile von Leichtbetonelementen sind alle natürlich, nämlich Zement aus Kalkstein und Tonmergel, Gesteinskörnungen wie Sand oder eben der Blähton als Leichtzuschlag und Wasser. Aus ökologischer Sicht sind diese Elemente daher für zahlreiche Anwendungsfälle ausgesprochen prädestiniert. Um die Wärmedämmung derartiger Leichtbetonschichten zu verbessern, werden zunehmend Leichtbetonelemente mit gefügedichtem Leichtbeton verwendet. Prinzipiell gilt, dass je geringer die Rohdichte ist, desto leistungsstärker ist die Wärmedämmung. Allerdings ist dabei zu beachten, dass je geringer die Rohdichte ist, desto geringer wird auch die Tragfähigkeit. Dies grenzt die Einsatzfähigkeit von Leichtbauelementen auf Basis von Blähton als Leichtzuschlag ein. Nachteilig bei derartig aufgebauten, eine Außenschicht aus Leichtbeton aufweisenden Bauelementen ist, dass die nach innen weisende Oberfläche relativ rau ist, so dass insbesondere beim Innenausbau zusätzlicher Putzaufwand entsteht, will man die Wärmedämmeigenschaften von reinen Betonelementen durch Leichtbeton mit Wärmedämmschichten an deren Oberfläche erreichen.

Um weitere Verbesserungen insbesondere der Wärmedämmeigenschaften zu erreichen, ist versucht worden, als Leichtzuschlag anstelle von Blähton Blähglas zu verwenden. Mit Blähglas können noch höhere Wärmedämmeigenschaften erreicht werden. Die ein wenig rauen Oberflächen derartiger Bauelemente sind jedoch ebenso nachteilig wie die bei den Elementen aus Blähton als Leichtzuschlag.

So ist in EP 2 008 983 B1 ein Verfahren zum Herstellen einer Gesteinskörnung beschrieben, welches insbesondere für Baumaterialien eingesetzt werden soll. Dort ist beschrieben, dass Leichtzuschläge wie beispielsweise Gesteinskörnungen aus Blähton, Blähschiefer, auch Blähglas, Bims oder Kesselsand oder selbst bei Herstellen einer gewissen Porigkeit des Betongefüges verwendet werden. Dabei ist ausschließlich darauf abgestellt, Blähton zu verwenden und die zu verwendende, zuzumischende Menge hinsichtlich der Materialeigenschaften, welche mit dem Leichtbeton mit Blähton als Zuschlagstoff erreicht werden soll, zu optimieren. Dafür ist vorgesehen, dass je nach Anwendungsfall zwar die Gesteinskörnung variieren kann, der Blähtonanteil aber in Bereichen von 20 bis 85 Masse-% liegen soll. Je höher der Anteil an gebranntem Ton im Leichtbeton ist, umso besser isolierend wirken derartige Leichtbetonelemente, desto geringer ist aber auch die Tragfähigkeit derartiger Elemente. Dies grenzt die Einsatzbreite derartiger Leichtbetonelemente ein.

In WO 03 106 365 A2 ist ein Bauelement aus Leichtbeton beschrieben, welches auch für den Hochbau geeignet sein soll, weil dessen Druckfestigkeit für einen Einsatz im Hochbau ausreichend hoch sein soll. Dabei wird beschrieben, dass als Leichtzuschlagstoff Bims, Hüttenbims, Perlite, Blähton, Blähglas oder Blähschiefer verwendet werden soll, wobei jedoch die Optimierung von Wärmedämmung und Druckfestigkeit durch eine Beimischung von Polymerzusätzen erreicht werden soll. Dies hat den Nachteil, dass Bauelemente mit chemischen Substanzen im Vergleich zu den ökologisch besseren Naturmaterialien ein späteres Recycling kaum ermöglichen. Die heute zunehmend nachgefragten ökologischen Aspekte werden mit derartigen, mit weiteren chemischen Substanzen versehenen Bauelementen den heutigen Anforderungen insbesondere an die Nachhaltigkeit nicht gerecht. Dies trifft insbesondere deshalb zu, weil der Feststoffgehalt derartiger beigemischter Polymerdispersionen im hohen Bereich von ca. 30 bis 80 Gew.-% liegt.

In WO 2024 10 99 72 A1 ist ein Wandelement beschrieben, welches eine herkömmliche stabilisierende Tragschicht und eine darauf aufgebrachte Wärmedämmschicht aufweist, für welche als Leichtzuschlagstoff Blähton verwendet wird. Der Gegenstand dieses Dokumentes des Standes der Technik besteht darin, dass für tragende Strukturen herkömmliche Betonelemente verwendet werden, welche mit sehr gut wärmedämmenden Oberflächenschichten versehen sind, bei welchen eine Optimierung nicht im Hinblick auf die Tragfähigkeit vorgenommen werden muss, sondern lediglich hinsichtlich guter Wärmedämmungseigenschaften. Somit ist deren Einsatzmöglichkeit auch eingeschränkt und genügt heutigen technischen und technologischen Orientierungen nicht mehr.

Ein ähnlicher Ansatz wird in WO 2023 14 79 83 gewählt, bei welchem nämlich zwar Blähglas als ein Material eingesetzt wird, welches positiven Einfluss auf die Wärmedämmung bei seiner Verwendung hat. Der Einsatz beschränkt sich aber auf die Mörtelzusammensetzung und ist auf eine schnelltrocknende Leichtschüttung ausgerichtet. Diese Mörtelzusammensetzung soll vornämlich, und zwar wegen ihres schnellen Aushärtens, zur Herstellung von Bodenkonstruktionen auf Substraten mit relativ geringer Tragfähigkeit eingesetzt werden. Ein Einsatz für eine hohe Tragfähigkeit erfordernde Strukturen ist bei diesem Stand der Technik ebenfalls nicht angesprochen.

Die anerkanntermaßen sehr guten Eigenschaften von Blähglas zur Verbesserung der Wärmedämmung, der Wärmespeicherung, der Dampfdiffusion, der Baubiologie, des Schallschutzes und des Brandschutzes von Leichtbauelementen machen derartige Leichtbauelemente mit Blähglas als Leichtzuschlag zwar vorteilhaft für zahlreiche Anwendungen, eine mehr oder weniger universelle Anwendung ist jedoch erst gegeben, wenn auch entsprechend hohe Tragfähigkeiten erreicht werden, was bei den bisher bekannten Leichtbauelementen noch nicht der Fall ist.

Prinzipiell ist es bekannt, dass Blähglas ein Dämmstoff ist, welcher zumal vorteilhafterweise aus recyceltem Altglas hergestellt werden kann. Auch weil nicht wiederverwertbare Glasreste verwendet werden können, handelt es sich um ein ökologisches Produkt. Bisher ist bekannt geworden, Blähglas als Schüttdämmstoff in Hohlräumen, für Deckendämmungen und zur thermischen Trennung von Bodenplatten, und zwar in Form von Blähglasgranulat, einzusetzen. Glasschaumschotter wird beispielsweise auch als Drainagematerial für Terrassen und Balkone verwendet. Blähglasgranulat findet auch bereits Einsatz in dünneren Leichtbauplatten und als Leichtzuschlag für Mörtel und Putze. Nachteilig für Blähglas ist, zumindest bisher, dass Dämmstoffe mit Blähglas zu den teureren Dämmstoffen gehören. Daher werden Elemente, welche unter Verwendung von Blähglas hergestellt werden, bisher auch nicht zwingend für tragende Bauelemente bei größeren bzw. höheren Baustrukturen eingesetzt, sondern hauptsätzlich als isolierende Elemente, wobei die tragenden Elemente und die isolierenden, deutlich in ihren Abmessungen dünneren Leichtbetonelemente mit Blähglas als Leichtzuschlag kombiniert werden. Zwar können bei Blähglas als Leichtzuschlag für Mörtel und Putze die Wärmedämmungseigenschaften von den üblicherweise als tragende Bauelemente verwendeten Betonelementen durch eine zusätzliche aufgebrachte Wärmedämmschicht verbessert werden, die Oberflächenqualität ist allerdings rauer als bei blähglasfreien Mörteln und Putzen.

In DE 10 2023 207 658 A1 ist eine Dämmstoffschüttung beschrieben, welche für Fußböden, Dachaufbauten und als Ausgleichsschicht mit integrierten Installationen von Leitungen sowie zum Ausgleich von Unebenheiten im Boden vorgesehen ist, wobei eine solche Dämmstoffgranulatzusammensetzung vorgesehen ist, damit sowohl die Wärmedämmung als auch die Schalldämmung und der Ausgleich von Unebenheiten bei Bodeneinsatz erreicht werden. Die dort beschriebene Bindemittelmischung für die Dämmstoffschüttung weist eine Aktivatorkomponente, nur mehlförmige Komponenten bzw. solche Bestandteile, eine Verdickerkomponente und einen inerten Zusatzstoff sowie ein weiteres Zusatzmittel auf. Die größeren Korngrößen ≥ 5 mm dienen einer guten Wärmedämmung, nicht aber hoher Tragfähigkeit. Die Druckfestigkeit ist auf 0,2 ...0,9 MPa beschränkt. Das Dämmstoffgranulat ist ein aus einem groben oder größeren Formstück mechanisch zerkleinertes Granulat mit einer porösen Außenoberfläche.

In DE 197 43 883 A1 sowie DE 295 21 623 U1 ist beschrieben, dass die widerstreitenden Eigenschaften von hoher Tragfähigkeit und hoher Wärmedämmung einen mindestens zweischichtigen Aufbau erfordern dergestalt, dass für die hohe Wärmedämmung eine gesonderte Schicht zu der Schicht für die hohe Tragfähigkeit zusammenzufügen ist.

Ein weiteres Problem von Leichtbauelementen mit Blähglas besteht darin, dass die einzelnen Granulatkörner des Blähglases zwar bruchfest sind, was als bruchkornfrei bezeichnet wird, es muss jedoch bei der Verwendung von Leichtbetonelementen mit Blähglas als Leichtzuschlag erreicht werden, dass neben der entsprechenden Tragfähigkeit auch keine zwischen den Körnern möglicherweise entstehenden Risse auftreten, was erreicht wird, indem eine gute Haftung zwischen den Körnern gewährleistet wird. Wegen der höheren Kornfestigkeit des Blähglases gegenüber Blähton können jedenfalls höhere Lasten von diesen Bauelementen getragen werden.

Die Aufgabe der vorliegenden Erfindung besteht daher darin, ein Leichtbauelement mit einem Leichtzuschlag in Form von Blähglas herzustellen, welches neben vor allen Dingen den Wärmedämmungseigenschaften auch deren Trageigenschaften erhöht, so dass es möglich wird, diese Leichtbauelemente bzw. Leichtbetonelemente mit Blähglas als Leichtzuschlag als tragende Wandstrukturen einzusetzen, welche neben sehr guten Trageigenschaften auch ausgezeichnete Wärmedämmungseigenschaften aufweisen, ohne dass spezielle Wärmedämmungsschichten auf die tragenden Bauteile noch aufgetragen werden müssen, so dass sich die Kosten für die Leichtbetonbauelemente mit Blähglas als Leichtzuschlag gegenüber den reinen, im allgemeinen für tragende Strukturen eingesetzten Betonelemente verringern. Gleichzeitig soll mit diesen Leichtbauelementen mit Blähglas als Leichtzuschlag ein Einsatz auch für Hochbaukonstruktionen möglich sein.

Diese Aufgabe wird durch ein Verfahren mit den Merkmalen gemäß Anspruch 1 sowie durch ein Leichtbauelement bzw. Leichtbetonelement mit Blähglas als Leichtzuschlag mit den Merkmalen gemäß Anspruch 7, welches mit dem Verfahren gemäß Anspruch 1 hergestellt ist, gelöst.. Zweckmäßige Weiterbildungen sind in den jeweiligen abhängigen Ansprüchen definiert.

Gemäß einem ersten Aspekt der Erfindung wird ein Verfahren zur Herstellung eines Leichtbauelementes gemäß einem der Ansprüche 1 bis 6 bereitgestellt. Bei diesem Verfahren wird ein Binder bzw. ein Bindemittel in Form von Zement und ein Leichtzuschlag in Form von Blähglasgranulat bei Zugabe von Wasser in einem solchen Verhältnis zueinander zu einer Mischung vermengt, dass der damit erhaltene niedrige Wasser-Zement-Wert einem Konsistenzbereich steif entspricht. Das entspricht etwa Stampfbeton, trägt zu einem raschen Aushärten bei, gewährleistet aber auf jeden Fall noch ein gutes Abbinden auch zur Verbindung der einzelnen Blähglasgranulatkugeln untereinander.

Bei dem erfindungsgemäßen Verfahren wird ein Leichtzuschlag in Form von Blähglasgranulat mit definierter Korngrößenverteilung zunächst aus einem Silo entnommen und anschließend unter Zugabe eines Zementbindemittels in einen Mischer gegeben, woran sich ein Zumischen von Wasser in den Mischer in einem solchen Verhältnis von Blähglasgranulat, Bindemittel und Wasser zu einer Mischung anschließt, dass für die Mischung ein einem Konsistenzbereich steif entsprechender Wasser-Zement-Wert erzeugt wird. Anschließend wird die Mischung in eine Schalung zum Gießen des Leichtbauelementes eingebracht, und zwar vorzugsweise nachdem eine Putzschicht in die Schalung aufgebracht worden ist. Nachdem die Mischung in die Schalung eingebracht worden und nach vollständiger Füllung der Schalung verdichtet und an ihrer Oberseite geglättet worden ist, verbleibt die Mischung in der Schalung bis zum Erhärten, so dass nach Erhärten das Leichtbauelement aus der Schalung entnommen werden kann.

Das vorstehend genannte Mischen des Leichtbetons wird in Zwangsmischung durchgeführt. Bei der Zugabe von Wasser werden vorzugsweise die jeweiligen äußeren Bedingungen wie Außentemperaturen, Feuchtigkeitsgehalt der Zuschlagstoffe etc. berücksichtigt. Vorzugsweise wird ein Stabilisator der Mischung beigegeben, damit die Homogenität der Mischung im gesamten Bereich innerhalb der Schalung des Leichtbauelementes eingehalten werden kann. Sobald die Mischung hergestellt ist, wird diese an Schienen geführte Kübel übergeben, aus welchen die Mischung in einen Behälter oberhalb der zu befüllenden Schalungen überführt wird. Um die Herstellung des Leichtbauelementes zeitgleich mit der Herstellung des Betongemisches ausführen zu können, wird mittels eines Putzaggregates, d. h. einer Putzmittelsprüheinrichtung, auf die Innenseite der Schaltische zuvor eine Putzschicht aufgetragen. Die Schichtdicken des Putzes sind dabei derart ausgeführt, dass eine kraftschlüssige Verbindung des Putzes mit dem Leichtbetongemisch realisiert werden kann. Das Abbinden wird über ein sogenanntes Frisch-In-Frisch-Verfahren realisiert, wobei die Abbindezeiten des Putzes und des Leichtbetons beachtet werden müssen. Auf diese vorbereitete Putzschicht wird das Leichtbetongemisch mittels eines Betonverteilers, welcher von dem vorstehend genannten Kübel gefüllt wird, lagenweise aufgetragen. Im Betonverteiler sind entsprechende Vorrichtungen vorgesehen, welche eine gleichmäßige Durchmischung des Betongemisches während des Betoniervorganges sorgen. Beispielsweise wird durch kurzzeitiges Vibrieren bzw. Tischrütteln eine gleichmäßige Verteilung des Betongemisches in der Schalung bis in Eck- und Kantenbereiche und ein Verdichten des Gemisches gewährleistet. Wenn die Schalung vollständig gefüllt ist, d. h. nach Beendigung des Betoniervorganges, wird die Oberfläche des Leichtbetonteils an dessen späterer Außenseite durch eine dafür vorgesehene vibrierende Walze vorzugsweise in Form einer Stahl-Rüttelwalze geglättet. Die Stahl-Rüttelwalze weist Vibrationseinrichtungen auf, welche für eine Ebenheit der Oberfläche sorgen, damit der gewollte haufwerksporige Charakter des Wandfertigteils erzeugt werden kann. Das Erhärten des Leichtbetonelements erfordert je nach Jahreszeit und Temperatur und Feuchtigkeit 10 bis 12 Stunden. Ein Erhärten kann künstlich verkürzt werden, indem die Stahltische, auf welchen die Schalungen für das Leichtbauelement aufgebracht sind, beheizt werden. Das Abheben des Leichtbauelementes als Fertigteil erfolgt aufgrund einer Adhäsionswirkung der Putzschicht mit der Innenseite der Schalung in einer 90°-Stellung des Schaltisches, welcher als Kipptisch ausgebildet ist, um durch das Abheben des Leichtbauelementes entstehende Zugkräfte zu verringern. Eine endgültige Erhärtung des Leichtbauelementes ist nach ca. 8 bis 10 Tagen abgeschlossen, so dass nach dieser Zeit der Transport zu einer Baustelle erfolgen kann.

Vorzugsweise weist das Blähglas eine Korngrößenverteilung von 0,25 bis 10 mm auf, wobei eine derartige Leichtzuschlagmenge und abgestimmte Korngrößenverteilung im Leichtbauelement vorhanden ist, dass dieses lasttragend und gleichzeitig hochwärmedämmend ist, d. h., dass zwischen der Eigenschaft lasttragend und der Eigenschaft wärmedämmend ein entsprechend abgestimmtes Optimum hergestellt wird. Weiter vorzugsweise wird bei dem Verfahren die Mischung auf eine vorzugsweise blähglasfreie, als Kalkschicht oder Zementschicht oder Kalkzementschicht ausgebildete Putzschicht als Mörtelschicht aufgetragen, welche nach ihrem Aushärten an ihrer Außenseite eine dem Innenraum zugewandte oberflächenfertige Außenseite aufweist.

Gemäß einem zweiten Aspekt der Erfindung ist vorgesehen, dass das Leichtbauelement bzw. das Leichtbetonelement einen Zement-Binder mit einer Rohdichte von ≥ 2000 kg/m³ und einen Leichtzuschlag mit einer Schüttdichte in einem Bereich von 100 bis 400 kg/ m³ aufweist. Die Rohdichte des Zementes bzw. des Zementbinders definiert das Verhältnis von Masse zur Raumeinheit, d. h. Volumen, eines porösen Stoffes einschließlich von dessen Poren und Hohlräumen. Die Rohdichte stellt also die Dichte der einzelnen nach dem Mahlen erzeugten Zementkörner ohne die Zwischenräume zwischen den Körnern dar. Die Schüttdichte definiert das Verhältnis der Masse zur Raumeinheit eines körnigen oder pulverförmigen Schüttgutes einschließlich der Hohlräume zwischen den Partikeln. Erfindungsgemäß ist als Leichtzuschlag Blähglas vorgesehen, welches als Granulat ausgebildet ist. Das Blähglas weist eine Korngrößenverteilung im Bereich von ca. 0,25 bis 10 mm auf und ist bezüglich seiner Menge mit 20 bis 70 Gew.-% in dem Leichtbauelement enthalten. Die in den angegebenen Größen variable Menge des Blähglases im Leichtbauelement und dessen Korngrößenverteilung sind nun derart aufeinander abgestimmt, dass das Leichtbauelement lasttragend ist und eine Wärmeleitfähigkeit im Bereich von 0,10 bis 0,20 W/(m·K) aufweist. Das erfindungsgemäße Leichtbauelement weist des Weiteren eine, als Kalkzementschicht ausgebildete Putzschicht auf, welche vorzugsweise blähglasfrei und nach ihrer Aushärtung oberflächenfertig ausgebildet ist und im Vergleich zu leichtzuschlagsfreien Betonelementen ein niedrigeres Schwindverhalten aufweist. Durch das niedrigere Schwindverhalten ist das Leichtbauelement im Wesentlichen rissfrei und weist eine hohe Lebensdauer auf. Unter tragend bzw. lastragend ist hier zu verstehen, dass die als Wandelemente ausgebildeten Leichtbauelemente übereinander für mehrstöckige Gebäude angeordnet werden können.

Es hat sich nun überraschenderweise gezeigt, dass es möglich ist, durch eine entsprechende Abstimmung von der Korngrößenverteilung, der Rohdichte des Binders und der Schüttdichte des Leichtzuschlags sämtliche relevanten Eigenschaften des erfindungsgemäßen Leichtbauelementes bzw. Leichtbetonelementes erreichen zu können. Das komplett aus einem Binder und einem entsprechenden Blähglasleichtzuschlag bestehende, d. h. einschichtig aufgebaute Leichtbauelement weist neben einer hohen Wärmedämmung, d. h. einer sehr niedrigen Wärmeleitfähigkeit, bei entsprechendem Gewicht und Anteil an der Gesamtmasse gleichzeitig eine hohe Tragfähigkeit auf, ohne dass eine zusätzliche wärmedämmende Schicht auf das tragende Bauelement aufgebracht werden muss. Es wird vielmehr der entgegengesetzte Weg hier beschritten, dass das tragende Bauelement als Leichtbauelement, bestehend aus einem Binder in Form von Zement und einem Leichtzuschlag als Blähglas in seiner einschichtigen Gesamtheit besteht und außerdem gerade deshalb ein sehr niedriges Schwindverhalten aufweist, so dass es rissbildungsmindernd ist. Das auch als tragendes Bauelement selbst im Hochbau verwendbare Leichtbauelement erhält auf der nach innen weisenden, eine Putzschicht darstellenden Oberflächenschicht, welche eine leichtzuschlagsfreie oder eine sogar mit einem Leichtzuschlag versehene Schicht und nach seinem Aushärten oberflächenfertig ausgebildet ist. Mit dieser zusätzlichen, eine geringe Dicke aufweisenden Schicht wird keine nennenswerte Wärmedämmung erreicht, es werden lediglich eine glatte Oberfläche für den Innenausbau bzw. für das Innere des Raumes eines Bauwerkes und ein fertiger Endzustand erreicht. Gemäß einem ersten Ausführungsbeispiel weist das Leichtbauelement vorzugsweise bezüglich des Blähglases als Leichtzuschlag eine Korngrößenverteilung im Bereich von 2 bis 8 mm auf. In diesem Bereich wird erreicht, dass die Wärmedämmung möglichst groß ist und die Tragfähigkeit möglichst hoch ist, dass aber auch das Schwindverhalten so gering ist, dass Risse nicht auftreten, da während des Aushärtens keine nennenswerten Spannungen im Leichtbauelement auftreten, die andererseits durch ein hohes Schwindverhalten mit anderen Korngrößenverteilungen auf jeden Fall begünstigt würden.

Vorzugsweise beträgt die Kornrohdichte 0,3 bis 0,75 g/cm³ sowie eine Kornfestigkeit von ≥ 1,5 bis ≤ 4,0 N/mm² (siehe Datenblatt_StoGranulates-EG_072) und gegebenenfalls größer. Bei der Abstimmung der Korngrößenverteilung und der Menge des Blähglases hat sich gezeigt, dass eine Korngrößenverteilung mehr hin zu Korngrößen im Bereich von 8 mm und größer zu einer Verringerung der Druckfestigkeit führt, während sie im Bereich unter 8 mm, d. h. mit einem höheren Feinanteil, zu einem schlechteren Wärmedämmwert führt.

Gemäß noch einer Weiterbildung ist vorgesehen, dass die Menge des Blähglases im Leichtbauelement 20 bis 65 Gew.-%, insbesondere 35 bis 60 Gew.-%, insbesondere 40 bis 60 Gew.-% beträgt. Diese Anteile an Blähglas im Leichtbauelement sichern einerseits eine hohe Wärmedämmung und eine hohe Tragfähigkeit, andererseits aber auch ein gutes Abbinden der Blähglasgranulatkugeln innerhalb des Leichtbauelementes, so dass die hohe Stabilität und Tragfähigkeit ohne weiteres gewährleistet werden kann. Dass das Leichtbauelement rissmindernd ausgebildet ist, hängt von der Blähglasmenge und der Blähglaskorngrößenverteilung ab, welche aufeinander abgestimmt werden, so dass bei niedrigem Schwindverhalten das Leichtbauelement an sich rissmindernd ist. Vorzugsweise wird dies bei einer Blähglasmenge von 35 bis 45 Gew.-% und bei einer Blähglaskorngrößenverteilung von 2 bis 8 mm am besten erreicht. Es sei jedoch hinzugefügt, dass das optimale Verhältnis von Blähglasmenge und Blähglaskorngrößenverteilung auch auf den verwendeten Zement abzustimmen ist. Diese Abstimmung erfolgt nicht vordergründig hinsichtlich der Korngröße an sich, sondern sie wird bezüglich der Verteilung der diskreten Korngrößen im gesamten Bereich vorgenommen.

Das bedeutet, dass die diskreten Korngrößen nicht mit jeweils gleichen Anteilen im angewendeten bzw. abgestimmten Bereich vorhanden sein müssen, sondern je nach Abstimmung mit unterschiedlicher prozentualer Menge vorhanden sein können.

Weitere Vorteile, Details und Anwendungsmöglichkeiten der vorliegenden Erfindung werden nun anhand eines Ausführungsbeispiels detailliert erläutert.

In der Zeichnung zeigen:
- Figur 1: eine Massivwand gemäß der Erfindung;
- Figur 2: eine Massivwand mit einer ursprünglichen Mischung aus Zement und einem Leichtzuschlag in Form von Blähglas mit Oberflächenabschnitt in Vergrößerung;
- Figur 3: ein Diagramm der Sieblinie für eine Massivwand gemäß der Erfindung;
- Figur 4: eine Massivwand aus Beton und dem Blähglas-Leichtzuschlag mit einer Vergrößerung der rauen Oberfläche als Außenfläche und einer Putzbeschichtung auf der ins Innere eines Gebäudes weisenden Seite;
- Figur 5: ein Beispiel eines im Bau befindlichen Einfamilienhauses mit erfindungsgemäßen als Leichtbauelemente ausgebildeten Massivbauelementen; und
- Figur 6: ein Beispiel einer größeren Baustruktur aus erfindungsgemäßen Massivbauelementen.

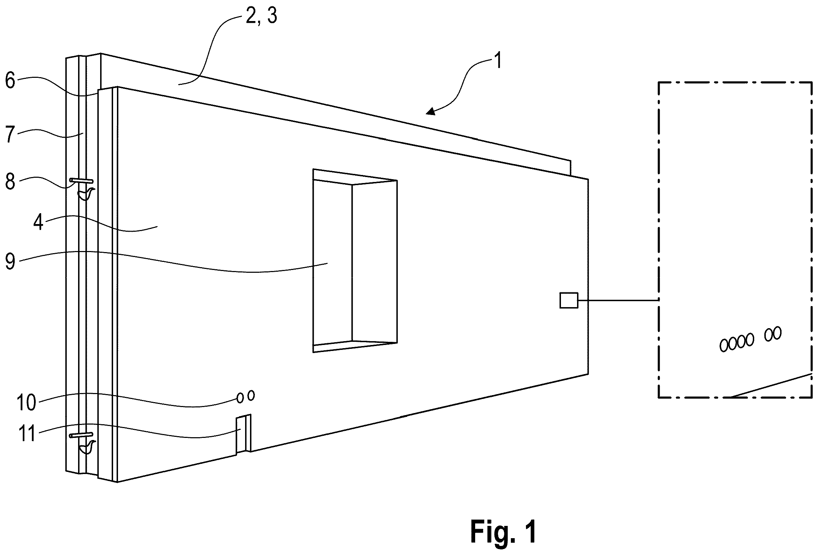

In Figur 1 ist ein erfindungsgemäßes als Leichtbauelement 1 ausgebildetes Massivbauelement dargestellt. Das Leichtbauelement 1 weist einen Körper aus Beton mit einem vor dem Aushärten zugegebenen Leichtzuschlag in Form von Blähglas 3 auf. Dargestellt ist dabei die prinzipiell körnige Struktur, welche darauf zurückzuführen ist, dass das als Granulat ausgebildete Blähglas 3 eine Korngrößenverteilung im Bereich von 0,25 bis 10 mm aufweist und mengenmäßig im Beton, je nach gewünschter Qualität und Tragfähigkeit des erfindungsgemäßen Leichtbauelementes 20 bis 70 Gew.-% Blähglas 3 enthält. Die Menge des Blähglases 3 im Leichtbauelement 1 und die Korngrößenverteilung des Blähglases 3, d. h., die Größe der Granulatkügelchen sind nun derart aufeinander abgestimmt, dass das Massivbauelement in Form eines Leichtbauelementes 1 nicht nur eine hohe Wärmedämmung im Bereich von 0,10 bis 0,20 W/(m K) aufweist, sondern als Massivkörper des erfindungsgemäßen Leichtbauelementes 1 bereits ohne zusätzliche Dämmschicht die hohe Wärmedämmung aufweist und gleichzeitig lasttragend ist, so dass diese erfindungsgemäßen Leichtbauelemente 1 auch für größere Strukturen, sogar für Hochbau-Strukturen, einsetzbar sind.

Das in Figur 1 dargestellte erfindungsgemäße massive Leichtbauelement 1 weist auf einer nach entsprechender Montage nach innen weisenden, d. h. in ein Rauminneres weisend, eine Putzschicht 4 auf. Die Putzschicht 4 ist ein werkseitig gelieferter Innenputz, welcher wegen der bereits hohen Wärmdämmfähigkeit des eigentlichen tragenden massiven Leichtbauelementes 1 ein normaler Putz ist, er muss also kein Blähglas 3 enthalten. Auf die blähglasfreie, dünn ausgebildete Putzschicht 4 kann beim Herstellungsprozess das Leichtbauelement 1 angegossen werden, so dass bei der späteren Montage das Element im Wesentlichen als Fertigteil verbaut werden kann. Dargestellt bei dem erfindungsgemäßen Leichtbauelement 1 ist oberhalb der Putzschicht 4 eine Aufkantung 6 zur Decke, auf welche Deckenelemente auflegbar sind. Aufgrund der hohen Tragfähigkeit des erfindungsgemäßen massiven Leichtbauelementes 1 sind keine zusätzlichen Tragstrukturen in das Leichtbauelement 1 zu integrieren. Der Grundkörper des massiven Leichtbauelementes 1 ist tragfähig genug, um eine Deckenlast und eine Last darüberliegender Wandelemente aufzunehmen und die entsprechenden Kräfte in das Bauteil bzw. in die Bauteile abzuleiten.

Des Weiteren ist in Figur 1 gezeigt, dass das erfindungsgemäße Leichtbauelement 1 eine Vergusstasche 7 aufweist, welche nach erfolgter Montage der einzelnen Elemente zur Verbindung zweier aneinandergrenzenden Teile mit entsprechendem Flüssigbeton bzw. vorzugsweise mit einem mit Blähglas 3 als Leichtzuschlag gemischten Leichtbeton aufgefüllt wird. Zur Montage sind des Weiteren Verbindungsschlaufen 8 vorgesehen. Im dargestellten Beispiel des massiven Leichtbauelementes 1 ist eine Fensteröffnung 9 vorgesehen, in welche nach erfolgter Montage des Bauelementes entsprechend Fenster verankert und integriert werden können. Da es sich um Fertigteile handelt, um eine rasche Montage einer Baustruktur auf einer Baustelle zu ermöglichen, sind in das Fertigteil dieses massiven Leichtbauelementes 1 bereits entsprechende Aussparungen für Elektrodosenöffnungen 10 und für Versorgungsleitungen 11 an den entsprechenden gewünschten Stellen vorgesehen. Damit werden bei Einsatz dieser Fertigbauteile spätere, ansonsten aufwändige Aufschlitzarbeiten eingespart, welche bei normalen Bauelementen, beispielsweise bei einer Ziegelbauweise, in aller Regel erforderlich sind, was von vornherein den Zeitaufwand für die Fertigstellung eines Bauwerkes erhöht.

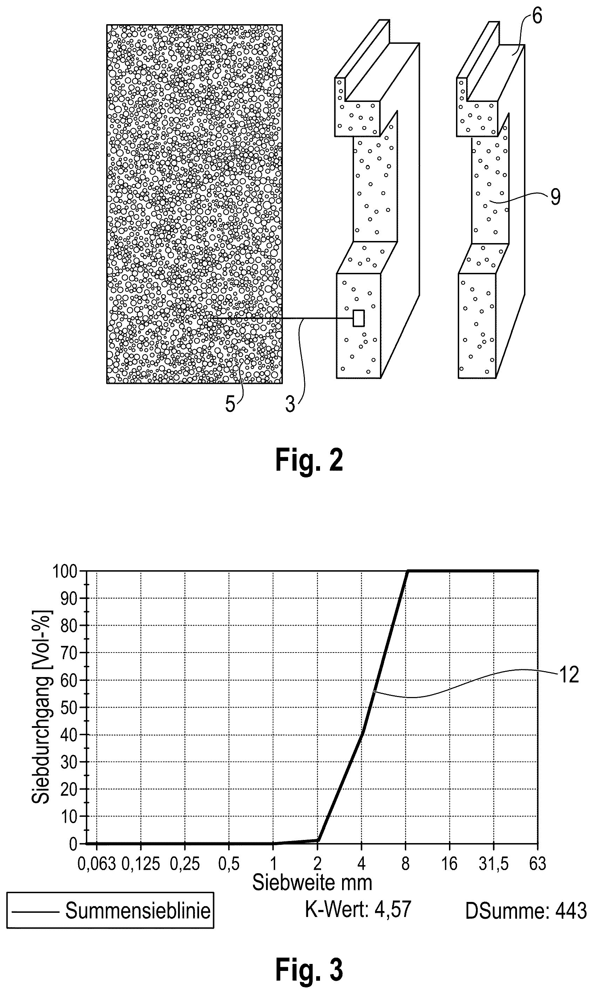

Figur 2 zeigt in prinzipieller Darstellung zwei Schnittansichten für erfindungsgemäße massive Leichtbauelemente 1 für Schnitte, welche durch eine Fensteröffnung 9 gelegt sind, und zwar für Normdicken der massiven Leichtbauelemente 1 von 42,5 cm (linkes Bauelement) und 36,5 cm (rechtes Bauelement). In analoger Darstellung zu dem insgesamt dargestellten massiven Leichtbauelement 1 gemäß Figur 1 ist die Aufkantung 6 für Deckenelemente dargestellt. Das massive Leichtbauelement 1, welches aus einer Mischung aus Zement und dem Leichtzuschlag Blähglas 3 gefertigt ist, hat eine durchgängige, durch das Granulat des Blähglases 3 innere Struktur mit definierter rauer Oberfläche, welche in vergrößerter Darstellung links in Figur 2 gezeigt ist. Diese durch das Blähglasgranulat definierte raue Oberfläche ist also über die gesamte Dicke des eigentlichen Körpers des Leichtbauelementes 1 vorhanden und hat als Zement-Blähglas-Mischung 5 das gezeigte Erscheinungsbild. Bei den oben erwähnten hohen Anteilen von Blähglas an der Gesamtmischung ergeben sich zwangsläufig hohe Tragfähigkeiten, wenn die Größe des Granulats des Blähglases 3 entsprechend einer gewünschten Sieblinie so hergestellt ist, dass die einzelnen Körner dicht gepackt und durch den Beton miteinander verbunden sind, so dass eine hohe Tragfähigkeit des massiven Leichtbauelementes 1 gemäß der Erfindung entsteht (siehe auch Fig. 3).

Der bisherige Einsatz von Blähglas 3 in Leichtbauelementen 1 war darauf gerichtet, dass der eigentliche massive Körper von Fertigteilen aus Normalbeton bestand, um die hohen Tragfähigkeiten, die insbesondere für Großstrukturen erforderlich sind, zu gewährleisten, und erhielten zusätzlich an ihren Oberflächen Dämmschichten mit einem hohen Anteil an Leichtzuschlag in Form von Blähglas 3, so dass gute Wärmdämmeigenschaften und hohe Tragfähigkeiten durch die Verwendung von zwei unterschiedlichen Materialien erreicht werden konnten. Die erfindungsgemäßen massiven Leichtbauelemente erreichen nun die hohe Tragfähigkeit bereits, indem die Bauelemente komplett aus einer Mischung aus Zement 2 und dem Leichtzuschlag Blähglas 3 hergestellt werden, wobei die Granulatgrößenverteilung und die Granulatdichte für die wesentlichen Eigenschaften Tragfähigkeit und Wärmedämmung in entsprechender Optimierung und Abstimmung zueinander erreicht werden. Der angegebene, abgestimmte Bereich der Granulatgrößenverteilung wird dabei hinsichtlich der eigentlichen Größe des Bereiches wie auch hinsichtlich des Anteils der jeweiligen Größe der Granulatkügelchen in dem Bereich variiert.

In Figur 3 ist ein Diagramm einer Sieblinie 12 für ein erfindungsgemäßes massives Leichtbauelement 1 gezeigt, welches eine Materialzusammensetzung aufweist, wie sie für die Fertigteile gemäß Figuren 1 und 2 gezeigt und beschrieben worden sind. Diese Sieblinie 12 beschreibt die Kornzusammensetzung der in der Mischung enthaltenen Zuschlagsstoffe eines Betons, und zwar für das erfindungsgemäße massive Leichtbauelement 1. Die Sieblinie 12 beschreibt den Zusammenhang zwischen sogenanntem K-Wert und einer D-Summe. Der K-Wert stellt die auf 100 bezogene Summe aller Rückstände dar, wohingegen die D-Summe die Summe aller Durchgänge beschreibt. Bei dem im Diagramm dargestellten K-Wert von 457 und der D-Summe von 443 ergibt sich somit eine Summe von 900.

Die in Figur 3 dargestellte Sieblinie 12 bedeutet, dass im Bereich der Siebweite zwischen 1 und 2 mm die diese Größe aufweisenden Granulatkügelchen nur bis ca. 1% an Menge vorhanden sind. Der Bereich der Siebweite von 2 bis 4 mm Größe der Granulatkügelchen ist dagegen mit ca. 39% vertreten, während der Bereich der Siebweite von 4 bis 8 mm mit bis ca. 60% enthalten ist. Daraus ist ersichtlich, dass die Sieblinie die jeweiligen Anteile definierter Größen des Granulats des Blähglases, d. h. dessen Fraktionen, für die jeweilige Siebweite bzw. den Siebweitenbereich in ihrer prozentualen Menge angegeben sind. Die dargestellte Sieblinie 12 hat somit einen deutlich größeren Anteil im oberen Bereich der Siebweite und zwar von 4 mm bis 8 mm, wohingegen in dem unteren Bereich der Siebweite ein Bereich von 2 bis 4 mm nur etwa mit 2/5 bzw. 40% der Gesamtmenge vertreten ist. Eine derartige Sieblinie beschreibt also zum einen den Bereich der Granulatkügelchen des Blähglases bezogen auf eine definierte Siebweite und zum anderen den Anteil eines bestimmten Größenbereiches der Granulatkügelchen über die Gesamtmenge der Blähglasgranulatkügelchen.

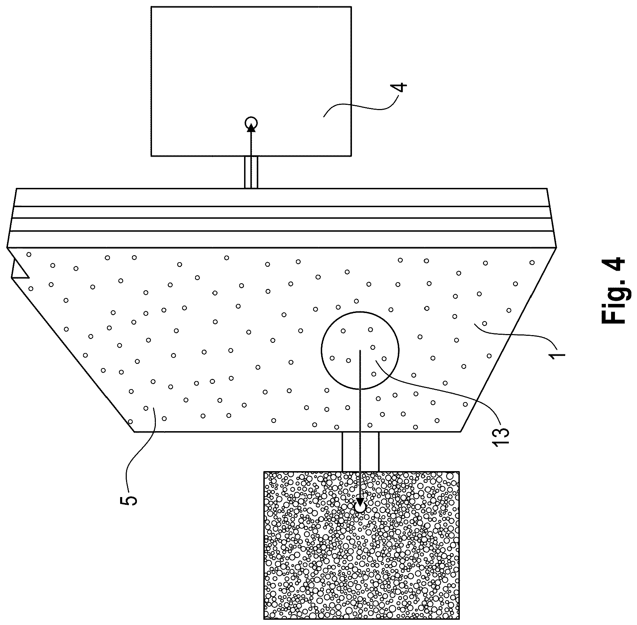

Figur 4 zeigt ein erfindungsgemäßes massives Leichtbauelement 1, welches bezüglich des Grundkörpers aus einer Beton-Blähglas-Mischung 5 besteht. Dieses Fertigteil entspricht im Wesentlichen dem in Figur 1 gezeigten, wobei dieses in Figur 1 dargestellte Fertigteil zusätzlich eine Fensteröffnung aufweist. Dargestellt in Figur 4 ist eine Außenseite des massiven Leichtbauelementes 1 mit einer vergrößerten Darstellung der sich durch die Beton-Blähglas-Mischung 5 ergebenden rauen Außenseite. Des Weiteren ist auf der nicht dargestellten, in einem Gebäude in den Innenraum weisenden Seite des massiven Leichtbauelementes 1 eine vergrößerte Oberflächenansicht einer dort aufgebrachten Putzschicht 4 gezeigt, d h. es ist eine werkseitige Innenputzschicht gezeigt. Die raue Außenseite des massiven Leichtbauelementes 1 hat den Vorteil, dass zusätzlich an der Außenseite des Gebäudes weitere Funktionsschichten aufgebracht werden können, welche durch die raue Struktur eine gute Verbindung mit der Außenseite eingehen, gleichzeitig aber das Fertigteil, d. h. das erfindungsgemäße Leichtbauelement 1 bezüglich des Innenputzes fertiggestellt ist, so dass aufwendige Putzarbeiten nach erfolgter Montage der jeweiligen Leichtbauelemente zur Fertigstellung der baulichen Struktur nicht mehr erforderlich sind.

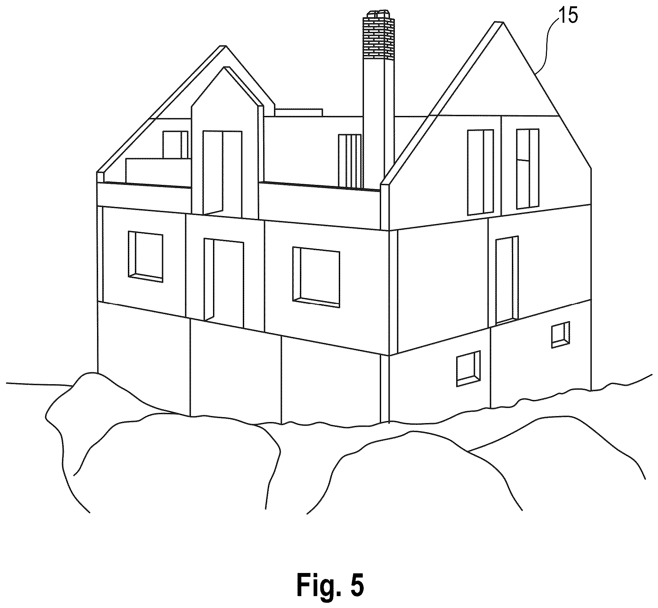

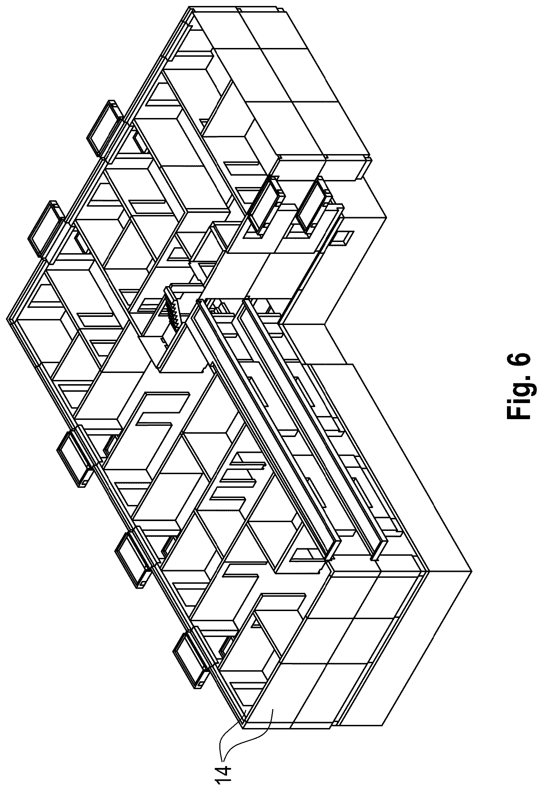

In Figur 5 ist beispielhaft der Rohbau eines aus massiven Leichtbauelementen 1 bestehenden Einfamilienhauses dargestellt, welcher aufgrund der Tatsache, dass die verwendeten Leichtbauelemente als Fertigteile am Bau ohne größere Nacharbeiten montiert werden können, so dass ein derartiger Rohbau einer baulichen Struktur wie das dargestellte Einfamilienhaus innerhalb weniger Tage montierbar ist. Für ein derartiges Einfamilienhaus sind massive Leichtbauelemente 1 als Wandelemente 14 (siehe Figur 6) wie auch als Giebelelemente 15 für das Gebäude herstellbar, so dass die gesamte Wandstruktur aus den erfindungsgemäßen massiven Leichtbauelementen 1 mit hoher Tragfähigkeit hergestellt werden kann.

Ein Beispiel einer größeren baulichen Struktur ist in Figur 6 gezeigt, wobei aus Figur 6 ersichtlich ist, dass die verschiedenen Wandfertigteile an den unterschiedlichen Einsatzorten in der Gesamtstruktur des Baus montiert werden. Die hohe Tragfähigkeit erlaubt auch eine Herstellung von vielstöckigen Bauwerken.

Die erfindungsgemäßen Massivwände, d. h. die Leichtbauelemente 1 zählen zu der Produktkategorie haufwerksporiger Leichtbeton. Die haufwerksporigen Leichtbetonwände, wie sie in den Strukturen gemäß Figur 5 und Figur 6 eingesetzt sind, weisen aufgrund ihrer hohen Materialdämpfung gegenüber allgemeinen Betonbauelementen oder Elementen aus anderen Baustoffen mit gleichen oder ähnlichen Flächenmaßen eine deutlich höhere Luftschalldämmung auf. Dies wird vor allen Dingen durch die porige Struktur des Blähglasgranulats 3 erreicht. Gleichzeitig wirkt sich diese porige Struktur positiv auf die Wärme- und Schalldämmung der Bauteile aus. Messungen haben gezeigt, dass bis zu 6 dB höhere Luftschalldämmwerte erreicht werden können. Beispielhaft sei erwähnt, dass die statischen Werte bei einer Festigkeitsklasse LAC 2 bei einer Trockenrohdichte von 450 kg/m³ und einer vom Hersteller angegebenen Wichte von 600 kg/m³ charakteristische Druckfestigkeiten von 2 Mpa und eine zulässige örtliche Auflagerpressung von 0,7 Mpa für den haufwerksporigen Leichtbeton gewährleisten.

Die massiven Leichtbauelemente 1 gemäß der Erfindung weisen außerdem geringere Diffusionswiderstände als Bauelemente aus herkömmlichen Materialien auf.

### Bezugszeichenliste

- 1: Leichtbauelement
- 2: Beton/Zement
- 3: Leichtzuschlag Blähglas
- 4: Putzschicht / werkseitiger Innenputz
- 5: Beton-Blähglas-Mischung
- 6: Aufkantung Decke
- 7: Vergusstasche
- 8: Verbindungsschlaufen
- 9: Fensteröffnung
- 10: Elektrodosenöffnung
- 11: Aussparung Versorgungsleitung
- 12: Sieblinie (Granulatverteilung)
- 13: Außenseite (ohne Putzschicht)
- 14: Wandelement
- 15: Giebelelement

## Patentansprüche

1. Verfahren zur Herstellung eines Leichtbauelementes, bei welchem ein Leichtzuschlag in Form von Blähglasgranulat mit definierter Korngrößenverteilung aus einem Silo entnommen und danach unter Zugabe eines Bindemittels in Form von Zement zu einer Mischung gemischt wird, wonach sich bei Zugabe von Wasser in den Mischer ein derartiges Verhältnis von Blähgranulat, Bindemittel und Wasser ergibt, dass die Mischung einen in einem Konsistenzbereich steif befindlichen Wasser-Zement-Wert aufweist und in eine Schalung zum Gießen des Leichtbauelementes eingefüllt wird und nach vollständiger Füllung der Schalung die Mischung durch Vibrieren verdichtet und an ihrer Oberseite geglättet wird, wobei die Mischung in der Schalung bis zum Erhärten verbleibt und danach aus der Schalung entnommen wird.

2. Verfahren nach Anspruch 1, bei welchem vor dem Einfüllen der Mischung in die Schalung auf deren Innenseite eine Putzschicht in einer derartigen Dicke aufgetragen wird, dass eine kraftschlüssige Verbindung der Leichtbauelementmischung mit der Putzschicht erzielt wird.

3. Verfahren nach Anspruch 1 oder 2, bei welchem die Mischung in der Schalung durch Tischvibration verdichtet und durch Walzenvibration an ihrer Oberseite geglättet wird.

4. Verfahren nach Anspruch 2, bei welchem die Mischung auf die blähglasfreie, als Kalkzementschicht ausgebildete Putzschicht aufgebracht und nach ihrer Aushärtung an ihrer Innenseite oberflächenfertig wird.

5. Verfahren nach einem der Ansprüche 1 bis 4, bei welchem das Blähglasgranulat mit einer Gesamt-Körnergrößenverteilung von 0,25 bis 10 mm mit einem gewünschten Sieblinien-Anteil von 2...4 mm Korngröße mit 40% an Leichtzuschlagmenge im Leichtbauelement gemischt wird und das Leichtbauelement lasttragend für Hochbaukonstruktionen und hochwärmedämmend ist.

6. Verfahren nach einem der Ansprüche 1 bis 5, bei welchem der Mischung ein Stabilisator zur Einhaltung von deren Homogenität im gesamten Bereich innerhalb der Schalung beigegeben wird.

7. Leichtbauelement (1), welches nach dem Verfahren gemäß den Ansprüchen 1 bis 5 hergestellt ist und welches komplett aus einer Mischung aus einem Binder in Form von Zement (2) mit einer Rohdichte von ≥ 2.000 kg/m³ und einem Leichtzuschlag in Form von Blähglas (3) mit einer Schüttdichte im Bereich von 100 bis 400 kg/m³ besteht, wobei das Blähglas (3) als Granulat ausgebildet ist, eine Korngrößenverteilung von 0,25 bis 10 mm aufweist und in einer Menge von 20 bis 70 Gew.-% in der Mischung enthalten ist, die Menge und die Korngrößenverteilung des Blähglases (3) im Leichtbauelement (1) im gesamten Bereich der diskreten Korngrößen mit jeweils entsprechend einer definierten Sieblinie unterschiedlicher prozentualer Mengen derart aufeinander abgestimmt sind, dass das Leichtbauelement (1) mit einer Druckfestigkeit von 2 Mpa als lasttragende Wandstruktur auch im Hochbau mit einer Wärmeleitfähigkeit von 0,10 bis 0,20 W/mK ohne zusätzliche wärmedämmende Schicht ausgebildet ist, und das Leichtbauelement (1) gegenüber einem blähglasfreien Betonelement ein niedrigeres Schwindverhalten aufweist, wobei der Anteil von Blähglas größerer Körnung deutlich größer ist als der Anteil kleinerer Körnung des Blähglasgranulates.

8. Leichtbauelement (1) nach Anspruch 7, bei welchem die Korngröße 2 bis 8 mm, insbesondere 4 bis 6 mm, des Blähglasgranulates beträgt.

9. Leichtbauelement (1) nach Anspruch 7 oder 8, bei welchem die Menge des Blähglasses (3) im Leichtbauelement (1) 20 bis 65 Gew.-%, insbesondere 35 bis 60 Gew.-%, insbesondere 40 bis 60 Gew.-% beträgt.

10. Leichtbauelement (1) nach einem der Ansprüche 7 bis 9, bei welchem das Verhältnis der Blähglasmenge und der Blähglaskorngrößenverteilung entsprechend der definierten Sieblinie so aufeinander abgestimmt ist, dass das Leichtbauelement (1) rissmindernd ausgebildet ist.
